# EUROPÄISCHE PATENTSCHRIFT

(11) **EP 2 756 917 B1**
(45) Veröffentlichungstag und Bekanntmachung des Hinweises auf die Patenterteilung: **29.03.2017**
(21) Anmeldenummer: 13199076.4
(22) Anmeldetag: 20.12.2013
(51) Int. Cl.: B23P 11/02, F01L 1/047, F16B 4/00, F16D 1/08, F16H 53/02

(54) **Vorrichtung zur Positionierung mehrerer Funktionselemente**
Device for positioning a plurality of functional elements
Dispositif de positionnement de plusieurs éléments fonctionnels

(30) Priorität: 17.01.2013 DE 102013200638
(43) Veröffentlichungstag der Anmeldung: 23.07.2014
(73) Patentinhaber: MAHLE International GmbH, 70376 Stuttgart (DE)
(72) Erfinder: Beerens, Christoph, 70193 Stuttgart (DE); Menonna, Antonio, 71254 Ditzingen (DE); Pfizenmaier, Lothar, 73669 Lichtenwald (DE); Schacherer, Roland, 78187 Geisingen (DE)
(74) Vertreter: BRP Renaud & Partner mbB Rechtsanwälte Patentanwälte Steuerberater

(56) Entgegenhaltungen:
- DE-A1- 10 225 688
- DE-A1-102007 056 638
- DE-A1-102008 064 194
- DE-A1-102009 060 350
- JP-A- H1 136 832
- JP-A- 2000 061 749
- JP-A- 2000 073 709
- JP-A- 2003 211 332
- JP-A- 2003 227 560

## Beschreibung

Die vorliegende Erfindung betrifft eine Vorrichtung zur Positionierung mehrerer eine Ausnehmung für eine Welle aufweisender Funktionselemente, insbesondere Nocken, Ausgleichsmassen, Zahnräder und/oder Lager gemäß dem Oberbegriff des Anspruchs 1. Die Erfindung betrifft außerdem ein Verfahren zum thermischen Fügen einer Welle mit mehreren Funktionselementen.

Eine solche Vorrichtung bzw. ein solches Verfahren sind aus der JP 2000 073709 A bekannt.

Aus der DE 10 2008 064 194 A1 ist eine gattungsgemäße Vorrichtung zur Positionierung mehrerer eine Ausnehmung für eine Welle aufweisender Funktionselemente, insbesondere Nocken, in einer vorbestimmten Winkelposition auf der Welle bekannt, wobei die Vorrichtung mehrere für jeweils ein Funktionselement bestimmte Aufnahmen aufweist, die jeweils mit einer die Winkelposition des jeweiligen Funktionselements entsprechend der Winkelposition auf der Welle festgelegten Ausformung ausgestattet sind. Die Aufnahmen sind dabei derart positionierbar, dass die Ausnehmungen der Funktionselemente auf einer gemeinsamen Geraden liegen. Zumindest einzelne Ausformungen weisen dabei eine einstellbare Winkelposition auf, wodurch ein lagerichtiges Positionieren der Funktionselemente vereinfacht werden kann. Aus der DE 10 2007 056 638 A1 ist eine weitere Vorrichtung zur Montage von einem Verbund, bestehend aus mindestens einer Funktionselemente tragenden Welle und einem diese in ungeteilten lagerabstützenden Gehäuse bekannt, wobei das Gehäuse Positioniereinrichtungen besitzt, die vor dem Fügen die Funktionselemente so in vorbestimmter Phasenlage im Gehäuse halten, dass die mindestens eine Welle durch die Lager des Gehäuses und Öffnungen in den Funktionselementen einschiebbar ist. Die Positioniereinrichtung ist dabei mit Ausnehmungen für die Funktionselemente versehen, die einen Anschlag besitzen, der das Funktionselement entgegen der Fügerichtung der Welle abstützt, wobei die Ausnehmung der Positioniereinrichtungen eine Teilkontur der Kontur der Funktionselemente als Negativprofil besitzen, so dass die Funktionselemente in einer Phasenlage gemäß ihrer späteren Fügeposition gehalten werden können. Die Teilkontur der Ausnehmungen umgreift dabei die Funktionselemente zumindest auf einem Teil von deren Außenkontur. Hierdurch soll eine besonders phasengenaue Positionierung erzielt werden können. Nachteilig bei den erfindungsgemäßen Vorrichtungen ist jedoch ein vergleichsweise aufwändiges Führen der Welle beim thermischen Fügevorgang.

Aus der DE 10 2009 060 350 A1 ist eine Vorrichtung zur Montage einer Funktionselemente tragenden Welle bekannt, wobei die Vorrichtung eine Maschinenplattform umfasst, auf der eine Mehrzahl von Positionierscheiben zur fluchtenden, lagerichtigen Positionierung der Funktionselemente derart angeordnet, dass eine Welle einschiebbar ist. Die Positionierscheiben sind reversibel auf einem Rahmen fixiert, der seinerseits reversibel auf der Maschinenplattform fixiert ist. Dadurch soll durch vorhalten mehrerer Rahmen ein schneller Wechsel eines Produktionsprozesses ermöglicht werden.

Die vorliegende Erfindung beschäftigt sich mit dem Problem, für eine Vorrichtung der gattungsgemäßen Art eine verbesserte Ausführungsform anzugeben, die insbesondere einen thermischen Fügevorgang deutlich vereinfacht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Vorrichtung zur Positionierung mehrerer eine Ausnehmung für eine Welle aufweisender Funktionselemente derart zu modifizieren, dass die einzelnen Funktionselemente in vertikaler Anordnung in der Vorrichtung angebracht sind, so dass ein thermisches Fügen einer Welle mit den Funktionselementen in vertikaler Richtung erfolgen kann. Durch das vertikale Fügen, beispielsweise das Einschieben der gekühlten Welle von oben in die vertikal übereinander angeordneten Funktionselemente kann insbesondere auf eine bisher erforderliche aufwändige Führung der Welle verzichtet werden, da das Führen der Welle bereits hauptsächlich von der Schwerkraft übernommen wird. Bei den aus dem Stand der Technik bekannten Vorrichtungen erfolgt ein Fügen der Welle mit den Funktionselementen stets in horizontaler Richtung, was ein häufiges und aufwändiges Abstützen der Welle während des Fügevorgangs erfordert. Die erfindungsgemäße Vorrichtung eignet sich insbesondere zum Fügen von Nocken, Ausgleichsmassen, Zahnrädern und/oder Lager in einer vordefinierten Winkelposition auf der Welle, wobei die Vorrichtung mehrere für jeweils ein Funktionselement bestimmte Aufnahmen aufweist, die jeweils mit einer die Winkelposition des jeweiligen Funktionselements entsprechend der Winkelposition auf der Welle festlegenden Ausformungen, in der Art von Nestern, ausgestattet sind. Die Aufnahmen für die einzelnen Funktionselemente sind dabei erfindungsgemäß nicht nur derart positioniert, dass die Ausnehmungen der Funktionselemente auf einer gemeinsamen Gerade liegen, sondern dass diese gemeinsame Gerade zusätzlich in im Wesentlichen vertikaler Richtung verläuft. Die einzelnen Aufnahmen sind somit in der Art von Balkonen übereinander angeordnet, wobei die Ausformungen in den jeweiligen Balkonen in der Art von Nestern ausgebildet sind. Zusätzlich besitzt die erfindungsgemäße Vorrichtung einen vertikal verfahrbaren Führungsschlitten für die Welle, mit Hilfe welchem ein Fügen der Welle mit den Funktionselementen in vertikaler Richtung und damit ohne den bisher erforderlichen hohen Führungsaufwand erfolgen kann. Die erfindungsgemäße Vorrichtung weist darüber hinaus den großen Vorteil auf, dass diese im Vergleich zu den bisher bekannten in horizontaler Richtung arbeitenden Vorrichtungen eine deutlich geringere Standfläche aufweist, so dass auf gleicher Fläche mehr Vorrichtungen angeordnet werden können.

Die Aufnahmen können in einer weiteren Ausführungsform mit mindestens drei Stiftelementen versehen sein, die so angeordnet sind, dass ein Funktionselement winkelgenau aufgenommen wird. Es ist ebenso denkbar die Ausformungen mit einer um das Funktionselement umlaufenden Kontur zu versehen, die an mindestens drei Stellen so geformt ist, das eine Kontaktstelle mit dem Funktionselement gebildet wird und das Funktionselement winkelgenau aufgenommen wird. Dies hat den Vorteil entweder nur mindestens drei Stifte mit großer Präzision positionieren zu müssen oder eine Kontur herzustellen, die nur an mindestens drei Stellen mit hoher Präzision bearbeitet sein muss. Dies bringt erhebliche Vorteile bei der Fertigung der Aufnahmen und senkt die Kosten deutlich.

Es ist erfindungsgemäß eine Heizeinrichtung vorgesehen, mittels welcher zumindest zwei Funktionselemente in den Aufnahmen, insbesondere induktiv, erhitzbar sind. Die Heizeinrichtungen besitzen dabei Induktionsspulen, die gemäß einer weiteren vorteilhaften Ausführungsform der Erfindung zudem individuell ansteuerbar sind. Mittels derartiger Heizeinrichtungen kann ein individuelles Beheizen der Funktionselemente erreicht werden, so dass beispielsweise unterschiedliche Funktionselemente mit individuellem Heizbedarf in ein und derselben Vorrichtung gefügt werden können.

Zweckmäßig sind die Aufnahmen zumindest teilweise aus einem induktiv nicht erhitzbaren Werkstoff, beispielsweise aus Keramik, ausgebildet, so dass bei einem Erhitzen der Funktionselemente in den Aufnahmen nicht gleichzeitig auch ein Erhitzen und damit ein Ausdehnen der Aufnahmen verbunden ist. Dies bietet wiederum den großen Vorteil, dass die Funktionselemente bei Raumtemperatur beispielsweise mit geringem Spiel in die zugehörige Ausformung der Aufnahmen einlegbar sind und sich erst beim Erhitzen aufgrund ihrer Wärmeausdehnungen in den Ausformungen verspannen. Wären die Aufnahmen und damit auch die Ausformungen ebenfalls aus einem induktiv erhitzbaren Werkstoff ausgebildet, so würden sich diese beim Erhitzen der Funktionselemente ebenfalls ausdehnen, wodurch unter Umständen die exakte Ausrichtung der Funktionselemente, was insbesondere bei Nocken auf einer Nockenwelle von entscheidender Bedeutung ist, verloren gehen.

Die Ausformung der Aufnahmen besitzt dabei eine zumindest teilweise Negativkontur der Funktionselemente, so dass die Funktionselemente winkelgenau in den Ausformungen der Aufnahmen aufgenommen werden können. Zudem kann diese Negativkontur derart auf die Außenkontur des aufzunehmenden Funktionselements abgestimmt sein, dass dieses zumindest bei Raumtemperatur mit geringem Spiel darin aufgenommen ist. Hierdurch ist insbesondere ein Bestücken der Vorrichtung mit den zu fügenden Funktionselementen besonders einfach möglich. Um ein exaktes Fixieren der einzelnen Funktionselemente in den Ausformungen der Aufnahmen zu gewährleisten, kann zudem vorgesehen sein, dass die Negativkontur um zumindest 10% der Wärmeausdehnung des mittels der Heizeinrichtung erwärmten Funktionselementes kleiner ist als das erhitzte Funktionselement. Hierdurch wird prozesssicher sichergestellt, dass das Funktionselement sicher und lageexakt in der Ausformung fixiert werden kann.

Auch wenn die Aufnahmen zumindest teilweise aus einem induktiv nicht erhitzbaren Werkstoff gefertigt sind, kann es im Produktionsprozess nach einiger Betriebszeit dazu kommen, dass sich die Aufnahmen erhitzen. Dadurch kann unter Umständen das prozesssichere Einlegen, Spannen und Entnehmen des Funktionselements aus der Aufnahme nicht mehr sichergestellt werden.

Es wird erfindungsgemäß eine Kühlung der Aufnahme vorgesehen, die es ermöglicht die Aufnahme zumindest im Bereich der Negativkontur bzw. der Ausformung auf einer vorbestimmten, sich im Betrieb einstellenden, Temperatur zu halten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a-e: unterschiedliche Verfahrensschritte a.) bis e.) zum thermischen Fügen einer Welle in einer erfindungsgemäßen Vorrichtung zur Positionierung mehrere eine Ausnehmung für die Welle aufweisender Funktionselemente,
- Fig. 2: eine Ansicht von oben auf eine erfindungsgemäße Aufnahme zur Fixierung des Funktionselementes,
- Fig. 3: eine Seitenansicht auf die erfindungsgemäße Vorrichtung,
- Fig. 4: eine Aufnahme mit drei Stiften zur Fixierung des Funktionselements,
- Fig. 5: eine Darstellung wie in Fig. 4, jedoch mit drei Kontaktstellen zur Fixierung des Funktionselements in der Ausformung der Aufnahme,
- Fig. 6: zwei auf einer Plattform angeordnete Aufnahmen,
- Fig. 7: eine weitere Ausführungsform der Vorrichtung.

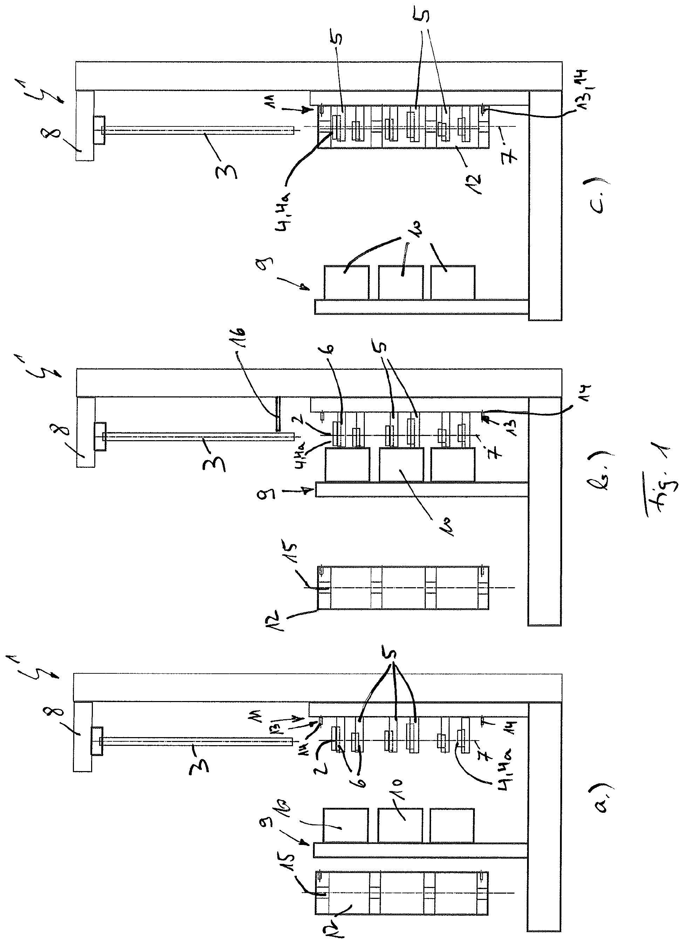

Entsprechend den Figuren 1a-e, 3 und 7, weist eine erfindungsgemäße Vorrichtung 1 zur Positionierung mehrere eine Ausnehmung 2 für eine Welle 3 aufweisender Funktionselemente 4 in einer vorbestimmten Winkelposition auf der Welle 3 mehrere für jeweils ein Funktionselement 4 bestimmte Aufnahmen 5 auf. Innerhalb der einzelnen balkonartig ausgebildeten Aufnahmen 5 sind jeweils Ausformungen 6 vorgesehen, über welche das jeweils aufgenommene Funktionselement 4, beispielsweise ein Nocken 4a mit einer die Winkelposition des jeweiligen Funktionselementes 4, 4a entsprechend der Winkelposition auf der Welle 3 festlegbar ist. Über die Ausformung 6 erfolgt somit ein winkelgenaues Ausrichten des Funktionselementes 4 bzw. des Nockens 4a relativ zur Welle 3, was insbesondere bei Nockenwellen von entscheidender Bedeutung für die Steuerung der Ventile des Verbrennungsmotors ist. Die Aufnahmen 5 und damit auch die Ausformungen 6 sind dabei vertikal übereinander angeordnet, wobei bei in der jeweiligen Ausformung aufgenommenen Funktionselemente 4 deren Ausnehmungen 2 auf einer gemeinsamen, vertikalen Geraden 7 liegen.

Darüber hinaus weist die erfindungsgemäße Vorrichtung 1 einen vertikal verfahrbaren Führungsschlitten 8 für die Welle 3 auf, wodurch ein Fügen der Welle 3 mit den Funktionselementen 4, 4a in vertikaler Richtung erfolgen kann. Dies bietet den besonderen Vorteil, dass sich die zu fügende Welle 3 bereits aufgrund der auf diese einwirkenden Schwerkraft selbst ausrichtet, so dass eine bisher beim horizontalen Fügen erforderliche aufwändige Ausrichtung vorzugsweise gänzlich entfallen kann.

Die Ausformungen 6 weisen eine zumindest teilweise Negativkontur der Funktionselemente 4, 4a auf, so dass diese winkelgenau und insbesondere passgenau darin positionierbar bzw. aufgenommen sind. Die Negativkontur umgreift dabei die Funktionselemente 4 zumindest auf einem Teil von deren Außenkontur. Die Negativkontur ist dabei auf die Außenkontur des aufzunehmenden Funktionselementes 4, beispielsweise des Nockens 4a, derart abgestimmt, dass das Funktionselement 4 bei Raumtemperatur mit geringem Spiel darin aufgenommen ist, wodurch ein besonders einfaches Einlegen bzw. Entnehmen aus der Ausformung möglich ist.

Zum thermischen Fügen der Welle 3 mit den Funktionselementen 4 ist eine Heizeinrichtung 9 vorgesehen, mittels welcher zumindest zwei der Funktionselemente 4 in den jeweiligen Aufnahmen 5 bzw. Ausformungen 6, insbesondere induktiv, erhitzbar sind. Zum induktiven Erhitzen der Funktionselemente 4, beispielsweise der Nocken 4a, besitzt die Heizeinrichtung 9 zumindest zwei, insbesondere unabhängig voneinander ansteuerbare, Induktionsspulen 10. Durch die Möglichkeit der individuellen Ansteuerung der einzelnen Induktionsspulen 10 ist es möglich, mit ein und derselben Vorrichtung 1 unterschiedlichste Funktionselemente 4, beispielsweise Nocken 4a und Zahnräder sowie Lager mit jeweils unterschiedlichem Erhitzungsbedarf zu fügen. Je nach Dicke der einzelnen Funktionselemente 4 benötigen diese nämlich zum Erreichen der Fügetemperatur unterschiedliche Heizleistungen bzw. Aufheizdauern. Zusätzlich oder alternativ kann selbstverständlich auch die Welle 3 gekühlt werden.

Die Negativform ist vorteilhaft derart bemessen, dass bei einer Erwärmung des Funktionselements 4 in der Negativform, das heißt der Ausformung 6, der erhitzte Nocken 4a bzw. das erhitzte Funktionselement 4 zuverlässig und exakt in der Ausformung 6 fixiert ist.

Um ein Verspannen des erhitzten Funktionselementes 4 in der Ausformung 6 der Aufnahme 5 zu erreichen, kann die Aufnahme 5 aus einem induktiv nicht erhitzbaren Werkstoff, beispielsweise aus Keramik, ausgebildet sein.

Es ist vorzugsweise vorgesehen, dass die Negativkontur um zumindest 10% der Wärmeausdehnung des mittels der Heizeinrichtung 9 erwärmten Funktionselementes 4 kleiner ist als das erhitzte Funktionselement 4, so dass das erhitzte Funktionselement 4 in der Negativkontur verspannt und fixiert ist. Trotz allem wird selbst eine derartige aus einem nicht induktiv erhitzbaren Werkstoff ausgebildete Aufnahme 5 mit zunehmender Produktionsdauer durch die Wärmeübertragung von den erhitzten Funktionselementen 4 erwärmt, so dass zweckmäßig vorgesehen ist, zumindest einer der Aufnahmen 5 kühlbar zu gestalten, wodurch ein prozesssicheres Einlegen, Spannen und Entnehmen des Funktionselements 4 ermöglicht wird.

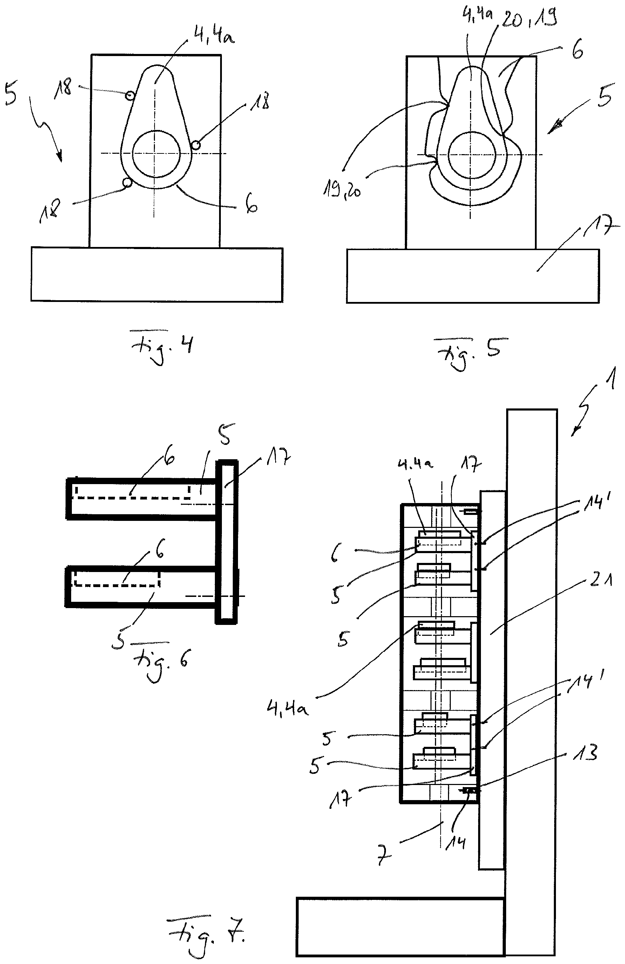

Die Abstände zwischen zwei nebeneinander stehenden, einen Zylinder bedienender Funktionselemente 4, insbesondere Nocken 4a sind in modernen Verbrennungsmotoren oftmals herstellerübergreifend gleich. Aus diesem Grund werden in einer besonders vorteilhaften Weiterentwicklung der Vorrichtung 1 mehrere Aufnahmen 5, insbesondere zwei Aufnahmen 5, auf eine gemeinsame Plattform 17 montiert. Da die Abstände oftmals gleich sind ergeben sich daraus besondere Vorteile, da Gleichteile eingesetzt werden können, was die Kosten massiv senken kann. Die mindestens zwei Plattformen 17 (vgl. Fig. 7) werden ausgerichtet an der Vorrichtung 1 montiert. Hierfür bieten sich Positioniereinrichtungen, wie Passstifte 14' oder fest angeordnete oder reversibel an der Vorrichtung 1 anbringbare Ausrichtelemente an. Die mindestens zwei Plattformen 17 können in einer weiteren vorteilhaften Weiterbildung der Vorrichtung 1 zweckmäßig zuerst auf einem Rahmen 21 zusammengesetzt werden, der dann als komplette Einheit auf die Vorrichtung 1 montiert werden kann. Es können mehrere Rahmen 21 vorgehalten werden und ein schneller Wechsel auf einen anderen Nockenwellentyp im Produktionsprozess vollzogen werden. Dies ermöglicht zum einen Gleichteile und einer schneller und flexibler Wechsel der Produktionsumgebung.

Zusätzlich kann die Vorrichtung 1 eine Halteeinrichtung 11 für einen Lagerrahmen 12 für die Welle 3 aufweisen, wobei eine Positionierung des Lagerrahmens 12 relativ zur Vorrichtung 1 über zumindest zwei Positionierelemente 13, insbesondere Passstifte 14, derart erfolgt, dass eine Lagergasse 15 des Lagerrahmens 12 fluchtend zu den Ausnehmungen 2 der einzelnen Funktionselemente 4 ist, so dass die Welle 3 einfach durch die Ausnehmungen 2 der Funktionselemente 4 um die dazu fluchtende Lagergasse 15 des Lagerrahmens 12 geschoben werden kann.

Gemäß den Figuren 1a bis 1e sind die einzelnen Verfahrensschritte a.) bis e.) zum thermischen Fügen der Welle 3 mit mehreren eine Ausnehmung 2 für die Welle 3 aufweisenden Funktionselemente 4, insbesondere Nocken 4a, Ausgleichsmassen, Zahnräder und/oder Lager, mittels der erfindungsgemäßen Vorrichtung 1 dargestellt.

Gemäß dem in Figur 1a dargestellten ersten Verfahrensschritt a.) werden zunächst die Funktionselemente 4, respektive die Nocken 4a, in die Ausformungen 6 der Aufnahmen 5 der Vorrichtung 1 winkelgenau eingelegt und zwar derart, dass die Ausnehmungen 2 der einzelnen Funktionselemente 4,4a auf einer gemeinsamen und im Wesentlichen vertikalen Geraden 7 liegen.

Anschließend werden die Welle 3 gekühlt und/oder die Funktionselemente 4, das heißt die Nocken 4a, erhitzt, beispielsweise mittels der zuvor erwähnten Heizeinrichtung 9. Dies erfolgt im Verfahrensschritt b.).

Im Verfahrensschritt c.) wird nun der Lagerrahmen 12 über die Positionierelemente 13, das heißt über die Passstifte 14, derart an der Vorrichtung 1 befestigt, dass die Lagergasse 15 des Lagerrahmens 12 fluchtend zu den Ausnehmungen 2 der einzelnen Funktionselemente 4 ausgerichtet ist.

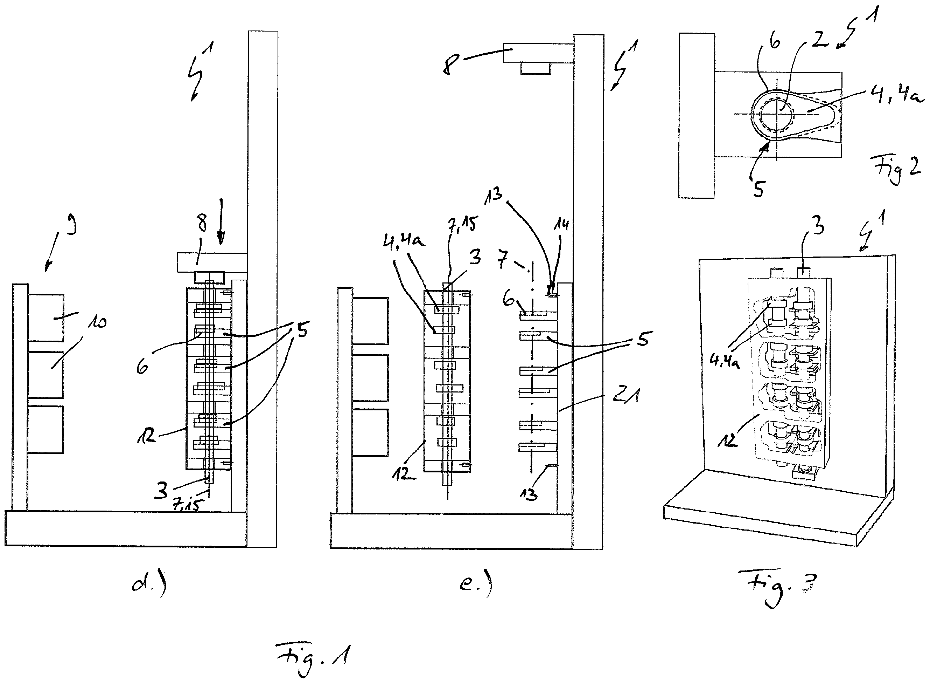

Ist dies erfolgt, wird die Welle 3 mittels der vertikal verfahrbaren Führungsschlittens 8 von oben durch die Ausnehmungen 2 der Funktionselemente und durch die Lagergasse 15 des Lagerrahmens 12 geschoben, wie dies gemäß der Figur 1d und damit dem Verfahrensschritt d.) dargestellt ist. Anschließend wird ein die Funktionselemente 4 auf der Welle 3 fixierender Temperaturausgleich abgewartet, bei welchem sich die Funktionselemente 4 abkühlen und/oder die Welle 3 erwärmt, so dass der thermische Fügesitz zwischen diesen beiden Bauteilen hergestellt werden kann. Im Verfahrensschritt e.) wird anschließend die Welle 3 samt darauf fixierter Funktionselemente 4 und zusätzlich mit dem Lagerrahmen 12 aus der Vorrichtung 1 entnommen. Dabei ist selbstverständlich klar, dass das thermische Fügen der Welle 3 mit den einzelnen Funktionselementen 4 rein theoretisch auch ohne den Lagerrahmen 12 erfolgen kann. In diesem Fall würde der Verfahrensschritt c.) entfallen.

Betrachtet man die Aufnahme 5 in Fig. 4, so weist diese dort drei Stiftelemente 18 auf, die so angeordnet sind, dass ein Funktionselement 4, 4a winkelgenau aufgenommen wird. Alternativ dazu kann zumindest eine Ausformung 6 mit einer um das Funktionselement 4, 4a umlaufenden Kontur versehen sein, die an mindestens drei Stellen 19 so geformt ist, das sich eine Kontaktstelle 20 mit dem Funktionselement 4, 4a ergibt und das Funktionselement 4, 4a winkelgenau fixiert wird, wie dies in Fig. 5 dargestellt ist. Durch die Stellen 19 wird somit eine eindeutige Lage der Funktionselemente 4, 4a in den Aufnahmen 5 erzwungen. Selbstverständlich können die Ausformungen 6 auch eine zumindest teilweise Negativkontur der Funktionselemente 4,4a aufweisen, so dass diese winkelgenau darin aufgenommen sind. Die Negativkontur ist dabei derart auf die Außenkontur des aufzunehmenden Funktionselements 4 abgestimmt, dass dieses bei Raumtemperatur mit geringem Spiel darin aufgenommen ist. Betrachtet man die Fig. 1, 3 und 7 kann man zudem sehen, dass mindestens vier Aufnahmen 5 vertikal übereinander angeordnet sind, so dass die gemeinsame Gerade 7 in vertikaler Richtung verläuft.

Mit der erfindungsgemäßen Vorrichtung 1 und mit dem erfindungsgemäßen Verfahren lässt sich das thermische Fügen von Funktionselementen 4 auf Wellen 3 deutlich vereinfachen, da durch das vertikale Fügen ein bisher erforderliches aufwändiges Ausrichten der Welle 3 nunmehr hauptsächlich von der Schwerkraft übernommen wird und somit nicht mehr zusätzlich manuell aufwändig erfolgen muss. Selbstverständlich kann die Vorrichtung 1 dennoch einzelne Führungselemente 16, beispielsweise als Führungspins, zum Führen der Welle 3 während des Fügevorgangs aufweisen.

## Patentansprüche

1. Vorrichtung (1) zur Positionierung mehrerer eine Ausnehmung (2) für eine Welle (3) aufweisender Funktionselemente (4), insbesondere Nocken (4a), Ausgleichsmassen, Zahnrädern und/oder Lager, in einer vorbestimmten Winkelposition auf der Welle (3), wobei
- die Vorrichtung (1) mehrere für jeweils ein Funktionselement (4) bestimmte Aufnahmen (5) aufweist, die jeweils mit einer die Winkelposition des jeweiligen Funktionselements (4) entsprechend der Winkelposition auf der Welle (3) festlegenden Ausformung (6) ausgestattet sind,
- die Aufnahmen (5) derart positionierbar sind, dass die Ausnehmungen (2) der Funktionselemente (4) auf einer gemeinsamen Geraden (7) liegen,
- die Aufnahmen (5) vertikal übereinander angeordnet sind, so dass die gemeinsame Gerade (7) in vertikaler Richtung verläuft,
- ein vertikal verfahrbarer Führungsschlitten (8) für die Welle (3) vorgesehen ist, so dass ein Fügen der Welle (3) mit den Funktionselementen (4) in vertikaler Richtung erfolgt,
- eine Heizeinrichtung (9) vorgesehen ist, mittels welcher zumindest zwei Funktionselemente (4) in den Aufnahmen (5), insbesondere induktiv, erhitzbar sind,
**dadurch gekennzeichnet,**
- **dass** zumindest eine Aufnahme (5) kühlbar ist, um zumindest im Bereich der Ausformung (6) eine bestimmte Temperatur einstellen zu können, selbst wenn ein erwärmtes Funktionselement (4) in der Aufnahme (5) positioniert ist.

2. Vorrichtung nach Anspruch 1,
**dadurch gekennzeichnet,**
**dass** die Aufnahmen (5) zumindest teilweise aus einem induktiv nicht erwärmbaren Werkstoff, insbesondere aus Keramik, ausgebildet sind.

3. Vorrichtung nach Anspruch 1 oder 2,
**dadurch gekennzeichnet,**
**dass** die Welle (3) über einen thermischen Fügesitz mit den Funktionselementen (4,4a) verbunden ist, zu dessen Herstellung die Welle (3) gekühlt und/oder die Funktionselemente (4,4a) erwärmt werden.

4. Vorrichtung nach einem der vorherigen Ansprüche,
**dadurch gekennzeichnet,**
- **dass** zumindest eine Aufnahme (5) mit mindestens drei Stiftelementen (18) versehen ist, die so angeordnet sind, dass ein Funktionselement (4, 4a) winkelgenau aufgenommen wird, oder
- **dass** zumindest eine Ausformung (6) mit einer um das Funktionselement (4, 4a) umlaufenden Kontur versehen ist, die an mindestens drei Stellen (19) so geformt ist, das sich eine Kontaktstelle (20) mit dem Funktionselement (4, 4a) ergibt und das Funktionselement (4, 4a) winkelgenau aufgenommen ist.

5. Vorrichtung nach einem der Ansprüche1, 2 oder 3,
**dadurch gekennzeichnet,**
**dass** die Ausformungen (6) eine zumindest teilweise Negativkontur der Funktionselemente (4,4a) aufweisen, so dass diese winkelgenau darin aufgenommen sind.

6. Vorrichtung nach Anspruch 5,
**dadurch gekennzeichnet,**
**dass** die Negativkontur derart auf die Außenkontur des aufzunehmenden Funktionselements (4) abgestimmt ist, dass dieses bei Raumtemperatur mit geringem Spiel darin aufgenommen ist.

7. Vorrichtung nach einem der Ansprüche 1 bis 6,
**dadurch gekennzeichnet,**
**dass** die Heizeinrichtung (9) zumindest zwei unabhängig voneinander steuerbare Induktionsspulen (10) aufweist.

8. Vorrichtung nach einem der Ansprüche 1 bis 7,
**dadurch gekennzeichnet,**
**dass** die Negativkontur um zumindest 10% der Wärmeausdehnung des mittels der Heizeinrichtung (9) erwärmten Funktionselementes (4) kleiner ist als das erhitzte Funktionselement (4), so dass das erhitze Funktionselement (4) in der Negativkontur verspannt und fixiert ist.

9. Vorrichtung nach einem der Ansprüche 1 bis 8,
**dadurch gekennzeichnet,**
**dass** mindestens vier Aufnahmen (5) vertikal übereinander angeordnet sind, so dass die gemeinsame Gerade (7) in vertikaler Richtung verläuft

10. Vorrichtung nach Anspruch 9,
**dadurch gekennzeichnet,**
- **dass** mindestens zwei Aufnahmen (5) auf einer Plattform (17) angeordnet sind,
- **dass** mindestens zwei derartige Plattformen (17) durch Positionierelemente an der Vorrichtung (1) angeordnet sind,
- **dass** die gemeinsame Gerade (7) vertikal verläuft.

11. Vorrichtung nach einem der Ansprüche 1 bis 10,
**dadurch gekennzeichnet,**
**dass** die Vorrichtung (1) eine Halteeinrichtung (11) für einen Lagerrahmen (12) für die Welle (3) aufweist, wobei eine Positionierung des Lagerrahmens (12) relativ zur Vorrichtung (1) über zumindest zwei Positionierelemente (13), insbesondere Passstifte (14), derart erfolgt, dass eine Lagergasse (15) des Lagerrahmens (12) fluchtend zu den Ausnehmungen (2) der einzelnen Funktionselemente (4) ist.

12. Verfahren zum thermischen Fügen einer Welle (3) mit mehreren eine Ausnehmung (2) für die Welle (3) aufweisenden Funktionselemente (4), insbesondere Nocken (4a), Ausgleichsmassen, Zahnrädern und/oder Lager, mittels einer Vorrichtung (1) nach einem der vorhergehenden Ansprüche, bei dem
- die Funktionselemente (4) in die jeweilige Ausformung (6) der Aufnahmen (5) der Vorrichtung (1) winkelgenau eingelegt werden, derart dass die Ausnehmungen (2) der Funktionselemente (4) auf einer gemeinsamen im Wesentlichen vertikalen Geraden (7) liegen,
- die Welle (3) gekühlt und/oder die Funktionselemente (4) erhitzt werden,
- die Welle (3) mittels eines vertikal verfahrbaren Führungsschlittens (8) von oben durch die Ausnehmungen (2) der Funktionselemente (4) geschoben wird,
- ein die Funktionselemente (4) auf der Welle (3) fixierender Temperaturausgleich abgewartet wird,
- die Welle (3) samt darauf fixierter Funktionselemente (4) aus der Vorrichtung (1) entnommen wird.

13. Verfahren nach Anspruch 12,
**dadurch gekennzeichnet,**
**dass** die Funktionselemente (4) in den Aufnahmen (5) oder extern erhitzt werden.

## Claims

1. Device (1) for positioning multiple function elements (4), having a recess (2) for receiving a shaft (3), in a predetermined angular position on the shaft (3), the function elements comprising in particular cams (4a), balancing masses, gear wheels and/or bearings, wherein
- the device (1) comprises multiple mountings (5) for receiving a function element (4), each mounting equipped with a moulding (6) establishing the angular position of the respective function element (4) corresponding to the angular position on the shaft (3),
- the mountings (5) can be positioned such that the recesses (2) of the function elements (4) lie on a common straight line (7),
- the mountings (5) are arranged vertically on top of one another, so that the common straight line (7) runs in a vertical direction,
- a vertically moveable guide carriage (8) for the shaft (3) is provided, so that the shaft (3) joins with the function elements (4) in a vertical direction,
- a heating device (9) is provided by means of which at least two function elements (4) in the mountings (5) can be heated, in particular inductively heated,
**characterized in that**
- at least one mounting (5) is coolable in order to be able to adjust a certain temperature at least in the region of the moulding (6) even when a heated function element (4) is positioned in the mounting (5).

2. Device according to claim 1,
**characterized in that**
the mountings (5) are at least partially formed from an inductively non-heatable material, in particular from ceramic.

3. Device according to claim 1 or 2,
**characterized in that**
the shaft (3) is connected to the function elements (4, 4a) via a thermal joining fit in which the shaft (3) is cooled and/or the function elements (4, 4a) are heated.

4. Device according to any of the preceding claims,
**characterized in that**
- at least one mounting (5) comprises at least three pin elements (18), which are arranged so that a function element (4, 4a) is angle-accurately received therein, or
- at least one moulding (6) has a contour surrounding the function element (4, 4a), the contour being formed in at least three locations (19) such that a contact point (20) with the function element (4, 4a) is obtained and the function element (4, 4a) is angle-accurately received.

5. Device according to any of claims 1, 2 or 3,
**characterized in that**
the mouldings (6) have an at least partial negative contour of the function elements (4, 4a) so that these are angle-accurately received therein.

6. Device according to claim 5,
**characterized in that**
the negative contour is matched to the outer contour of the function element (4) to be received such that the function element does not securely couple with the moulding at room temperature.

7. Device according to any of claims 1 to 6,
**characterized in that**
the heating device (9) comprises at least two induction coils (10) which can be controlled independently of one another.

8. Device according to any of claims 1 to 7,
**characterized in that**
the negative contour is smaller by at least 10% of the heat expansion of the function element (4) heated by the heating device (9) than the heated function element (4), so that the heated function element (4) is braced and fixed in the negative contour.

9. Device according to any of claims 1 to 8,
**characterized in that**
at least four mountings (5) are arranged vertically on top of one another so that the common straight line (7) runs in a vertical direction.

10. Device according to claim 9,
**characterized in that**
- at least two mountings (5) are arranged on a platform (17),
- at least two such platforms (17) are arranged on the device (1) through positioning elements,
- the common straight line (7) runs vertically.

11. Device according to any of claims 1 to 10,
**characterized in that**
the device (1) comprises a holding device (11) for a bearing frame (12) for the shaft (3), wherein positioning of the bearing frame (12) relative to the device (1) takes place by way of at least two positioning elements (13), in particular fitted pins (14), such that a bearing gallery (15) of the bearing frame (12) is aligned with the recesses (2) of the individual function elements (4).

12. Method for thermally joining a shaft (3) with multiple function elements (4) having a recess (2) for the shaft (3) using a device (1) according to any of the preceding claims, the function elements comprising in particular one of cams (4a), balancing masses, gear wheels and/or bearings, the method comprising
- placing the function elements (4) angle-accurately in a respective moulding (6) of the mountings (5) of the device (1), such that the recesses (2) of the function elements (4) lie on a common substantially vertical straight line (7),
- cooling the shaft (3) and/or heating the function elements (4),
- pushing the shaft (3) by means of a vertically moveable guide carriage (8) from above through the recesses (2) of the function elements (4),
- fixing the function elements (4) on the shaft (3) by awaiting a temperature equalisation,
- removing the shaft (3) including function elements (4) fixed thereon from the device (1).

13. Method according to claim 12,
**characterized in that**
the function elements (4) are heated in the mountings (5) or heated externally.

## Revendications

1. Dispositif (1) servant à positionner plusieurs éléments fonctionnels (4) présentant un évidement (2) pour un arbre (3), en particulier des cames (4a), des contrepoids, des roues dentées et/ou des supports, dans une position angulaire prédéfinie sur l'arbre (3), dans lequel
- le dispositif (1) présente plusieurs logements (5) définis pour respectivement un élément fonctionnel (4), lesquels sont équipés respectivement d'une partie saillante (6) fixant la position angulaire de l'élément fonctionnel (4) respectif de manière à correspondre à la position angulaire sur l'arbre (3),
- les logements (5) peuvent être positionnés de telle manière que les évidements (2) des éléments fonctionnels (4) se situent sur une droite (7) commune,
- les logements (5) sont disposés de manière verticale les uns au-dessus des autres de telle sorte que la droite (7) commune s'étend dans une direction verticale,
- un chariot de guidage (8) pouvant être déplacé de manière verticale est prévu pour l'arbre (3) de sorte qu'un assemblage de l'arbre (3) et des éléments fonctionnels (4) ait lieu dans une direction verticale,
- un système de chauffage (9) est prévu, au moyen duquel au moins deux éléments fonctionnels (4) peuvent être chauffés, en particulier par induction, dans les logements (5),
**caractérisé en ce**
**qu'**au moins un logement (5) peut être refroidi afin de pouvoir régler, au moins dans la zone de la partie saillante (6), une température définie même quand un élément fonctionnel (4) réchauffé est positionné dans le logement (5).

2. Dispositif selon la revendication 1,
**caractérisé en ce**
**que** les logements (5) sont réalisés au moins en partie à partir d'un matériau ne pouvant pas être réchauffé par induction, en particulier à partir d'une céramique.

3. Dispositif selon la revendication 1 ou 2,
**caractérisé en ce**
**que** l'arbre (3) est relié aux éléments fonctionnels (4, 4a) par l'intermédiaire d'un siège d'assemblage thermique, l'arbre (3) étant refroidi et/ou les éléments fonctionnels (4, 4a) étant réchauffés aux fins de la fabrication de celui-ci.

4. Dispositif selon l'une quelconque des revendications précédentes,
**caractérisé en ce**
- **qu'**au moins un logement (5) est pourvu d'au moins trois éléments tiges (18), qui sont disposés de telle sorte qu'un élément fonctionnel (4, 4a) est logé selon un angle précis, ou
- **qu'**au moins une partie saillante (6) est pourvue d'un contour s'étendant tout autour de l'élément fonctionnel (4, 4a), lequel est formé au niveau au moins de trois points (19) de telle sorte qu'il en résulte un point de contact (20) avec l'élément fonctionnel (4, 4a) et que l'élément fonctionnel (4, 4a) est logé selon un angle précis.

5. Dispositif selon l'une quelconque des revendications 1, 2 ou 3,
**caractérisé en ce**
**que** les parties saillantes (6) présentent un contour négatif au moins en partie des éléments fonctionnels (4, 4a) de sorte qu'ils y soient logés selon un angle précis.

6. Dispositif selon la revendication 5,
**caractérisé en ce**
**que** le contour négatif est adapté au contour extérieur de l'élément fonctionnel (4) à loger de telle manière que ce dernier y est logé à température ambiante avec un léger jeu.

7. Dispositif selon l'une quelconque des revendications 1 à 6,
**caractérisé en ce**
**que** le système de chauffage (9) présente au moins deux bobines à induction (10) pouvant être commandées indépendamment l'une de l'autre.

8. Dispositif selon l'une quelconque des revendications 1 à 7,
**caractérisé en ce**
**que** le contour négatif est inférieur d'au moins 10 % de la dilation thermique de l'élément fonctionnel (4) réchauffé au moyen du système de chauffage (9) à l'élément fonctionnel (4) chauffé de sorte que l'élément fonctionnel (4) chauffé soit précontraint et fixé dans le contour négatif.

9. Dispositif selon l'une quelconque des revendications 1 à 8,
**caractérisé en ce**
**qu'**au moins quatre logements (5) sont disposés de manière verticale les uns au-dessus des autres de sorte que la droite (7) commune s'étende dans une direction verticale.

10. Dispositif selon la revendication 9,
**caractérisé en ce**
- **qu'**au moins deux logements (5) sont disposés sur une plate-forme (17),
- **qu'**au moins deux plates-formes (17) de ce type sont disposées au niveau du dispositif (1) par des éléments de positionnement,
- **que** la droite (7) commune s'étend de manière verticale.

11. Dispositif selon l'une quelconque des revendications 1 à 10,
**caractérisé en ce**
**que** le dispositif (1) présente un système de maintien (11) pour un cadre de support (12) pour l'arbre (3), dans lequel un positionnement du cadre d'arbre (12) par rapport au dispositif (1) a lieu par l'intermédiaire au moins de deux éléments de positionnement (13), en particulier de tiges d'adaptation (14) de telle manière qu'une voie de support (15) du cadre de support (12) est alignée avec les évidements (2) des divers éléments fonctionnels (4).

12. Procédé servant à assembler de manière thermique un arbre (3) à plusieurs éléments fonctionnels (4) présentant un évidement (2) pour l'arbre (3), en particulier à des cames (4a), des contrepoids, des roues dentées et/ou des supports, au moyen d'un dispositif (1) selon l'une quelconque des revendications précédentes, où
- les éléments fonctionnels (4) sont placés selon un angle précis dans la partie saillante (6) respective des logements (5) du dispositif (1) de telle manière que les évidements (2) des éléments fonctionnels (4) se trouvent sur une droite (7) commune sensiblement verticale,
- l'arbre (3) est refroidi et/ou les éléments fonctionnels (4) sont chauffés,
- l'arbre (3) est glissé au moyen d'un chariot de guidage (8) pouvant être déplacé de manière verticale, depuis le haut, à travers les évidements (2) des éléments fonctionnels (4),
- une compensation de température fixant les éléments fonctionnels (4) sur l'arbre (3) est attendue,
- l'arbre (3) y compris des éléments fonctionnels (4) fixés sur ce dernier sont retirés du dispositif (1).

13. Procédé selon la revendication 12,
**caractérisé en ce**
**que** les éléments fonctionnels (4) sont chauffés dans les logements (5) ou en externe.
